(19) Europäisches Patentamt
European Patent Office
Office européen des brevets

(11) EP 2 790 363 A1

(12) EUROPEAN PATENT APPLICATION

(43) Date of publication:
15.10.2014 Bulletin 2014/42

(51) Int Cl.:
H04L 25/02 (2006.01)          H04L 25/03 (2006.01)
H04L 27/26 (2006.01)

(21) Application number: 13368026.4

(22) Date of filing: 02.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.09.2012 EP 12306117

(71) Applicant: ST-Ericsson SA
1228 Plan-les-Ouates (CH)

(72) Inventor: Dhayni, Achraf
06220 Vallauris (FR)

(74) Representative: Kemp, Paul Geoffrey
Riviera Patents
75 Avenue de la Californie
06200 Nice (FR)

(54) A new interpolation algorithm for pilot-based channel estimation in OFDM systems

(57) An OFDM receiver (1) such as a WiFi receiver receives data via a plurality of data subcarriers and a plurality of pilot subcarriers. The data and pilot signals are processed through a conventional demultiplexer (2) and DFT(3) before delivering each pilot signal to a transfer function estimation module (4). The transfer function estimation module (4) includes a Cartesian to polar coordinate conversion module (5) to convert each pilot signal to polar form and facilitate separate calculation of amplitude and phase transfer functions. An amplitude phase transfer function and phase transfer function is then calculated for each data subcarrier and used to form a complex transfer function for each subcarrier. The complex transfer function is then applied to each respective subcarrier via an equaliser to equalise each data subcarrier and correct for data signal corruption caused by attenuation noise or other factors.

Fig 1

EP 2 790 363 A1

**Description**

**Field of the invention**

The invention relates to the field of multicarrier communications systems and more particularly to Orthogonal Frequency-Division Multiplexing (OFDM) systems, including wireless OFDM systems.

**Background of the invention**

Orthogonal Frequency-Division Multiplexing (OFDM) is also referred to as "multicarrier modulation" (MCM) or "discrete multi-tone modulation" (DMTM). OFDM splits up and encodes high-speed incoming serial data, modulating it over a plurality of different carrier frequencies (called "subcarriers") within a communication channel to transmit the data from one user to another. The serial information is broken up into a plurality of sub-signals that are transmitted simultaneously (in parallel) over the subcarriers.

By spacing the subcarrier frequencies at intervals of the frequency of the symbols to transmit, the peak power of each modulated subcarrier lines up exactly with zero power components of the other modulated subcarriers, thereby providing orthogonality (independence and separability) of the individual subcarriers. This allows a good spectral efficiency (close to optimal) and minimal inter-channel interference (ICI), i.e. interference between the subcarriers.

For these reasons, OFDM is used in many applications. Many digital transmission systems have adopted OFDM as the modulation technique such as digital broadcasting terrestrial TV (DVB-T), digital audio broadcasting (DAB), terrestrial integrated services digital broadcasting (ISDB-T), digital subscriber line (xDSL), WLAN systems, e.g. based on the IEEE 802.11 a/g standards, cable TV systems, etc.

In an OFDM system, the transmitter modulates the message bit sequence into PSK/QAM symbols, performs IDFT (Inverse Discrete Fourier Transform) on the symbols to convert them into time-domain signals, and then sends them out through a transmission channel (in general a wireless channel).

The received signal is usually distorted by the channel characteristics. In order to recover the transmitted bits, the channel effect must be estimated and compensated in the receiver; this is called channel equalization.

As known by the OFDM theory, each subcarrier (i.e. each input of the Inverse DFT in the transmitter) can be regarded as an independent channel, as long as no ICI (Inter-Carrier Interference) occurs, and thus preserving the orthogonality among subcarriers. The orthogonality allows each subcarrier component of the received signal to be expressed as the product of the transmitted signal and channel frequency response (transfer function) at the subcarrier. Thus, the transmitted signal can be recovered by estimating the channel response just at each subcarrier.

In general, the channel can be estimated by using a preamble symbols or pilot subcarriers known to both transmitter and receiver, which employ various interpolation techniques to estimate the channel response of the subcarriers between pilot tones.

Preamble symbols are training data where all subcarriers are used for channel estimation. The preamble is usually transmitted at the beginning of each OFDM packet.

Pilot subcarriers are dedicated subcarriers for channel estimation. The other subcarriers can be used for data transmission; Pilot subcarriers are transmitted in the same time as OFDM symbols.

In general, a data signal or a training signal, or both, can be used for channel estimation. In order to choose the channel estimation technique for the OFDM system under consideration, many different aspects of implementations, including the required performance, computational complexity and time-variation of the channel must be taken into account.

Several standards specify the use of channel estimation using pilot subcarriers. For instance the WLAN 802.11a/g standard is based on 4 pilot subcarriers that are sent with each OFDM symbol. The pilot subcarriers are spaced in frequency by having them transmitted by subcarriers -21, -7, +7 and +21.

The data transmitted over each of the pilot subcarriers is known to the receiver. In each symbol received by the receiver, the outputs of the DFT (Discrete Fourier Transform) corresponding to the subcarrier frequencies -21, -7, +7 and +21 have phases and amplitudes that are known to the receiver (in particular, the amplitude is set to a "unit amplitude" and the phase is either 0 or 180 degrees).

Based on these pilot subcarriers, the channel estimation can be performed in the frequency domain by the receiver, i.e. after the DFT module. For each subcarrier, the channel equation is: Y(k)=C(k).X(k)+Z(k)

Where

- k is the subcarrier (or sub-channel) frequency index,
- X(k) is the subcarrier signal of $k^{th}$ index at the input to the Inverse Digital Fourier Transform (IDFT) module of the transmitter (i.e. the transmitted OFDM symbol k in the frequency domain)
- Y(k) is the corresponding signal output from the Digital Fourier Transform (DFT) module of the receiver (i.e. the received OFDM symbol k in the frequency domain),

- C(k) is the frequency response (or transfer function) at the frequency of the k$^{th}$ subcarrier (i.e. k$^{th}$ sample of the channel transfer function), and,
- Z(k) is the noise frequency spectrum. If the DFT input noise is white, the output noise Z(k) is also white.

For channel estimation, the components X(k)s are known pilot subcarriers with unit amplitude and phase at $\pi$ or -$\pi$ (i.e. a BPSK signal is sent over each pilot subcarrier).

The subcarrier response $\hat{C}(k)$ can be directly estimated as an interpolation of the product $X^*(k_p)$. $Y(k_p)$, where kp corresponds to pilot indices. In the example of a WLAN 802.11 a/g based implementation, these pilot indices can take as values: -21, -7, +7 and +21.

In order to find the other $\hat{C}(k)$, an interpolation (and an extrapolation) can be made on the basis of the know $\hat{C}(k)$. This estimates the channel frequency response p in the pass-band of the OFDM transmitted signal. In a WLAN 802.11a/g, this pass-band corresponds to 52 samples spaced by 312.5 kHz.

Once the transfer function $\hat{C}(k)$ is determined, it can be used for channel equalization. This channel equalization process can consist in dividing the previously described equation Y(k)=C(k).X(k)+Z(k) by C(k).

We can then write:

$$\frac{Y(k)}{C(k)} = C(k).\frac{X(k)}{C(k)} + \frac{Z(k)}{C(k)} = X(k) + noise$$

However this technique is not very satisfactory, as the "noise" is not easy to estimate and the interpolation/extrapolation error rate is often too high. There is a therefore a need for a solution improving the situation.

**Statement of invention**

Accordingly the present invention provides an OFDM receiver to receive a plurality of signals transmitted in parallel via multiple subcarrier channels, wherein at least one subcarrier is a pilot subcarrier to receive a pilot signal and at least one subcarrier carries a data subcarrier to carry a data signal comprising:
a pilot subcarrier transfer function estimation module arranged to receive the pilot signal and to estimate a transfer function for the pilot subcarrier response;
an extrapolation module responsive to the estimated pilot channel transfer function to extrapolate a transfer function for the channel response of the data subcarrier; and an equaliser module responsive to the extrapolated data subcarrier transfer function to equalise a data signal received via the data sub carrier; characterised in that the pilot sub carrier estimation module comprises a Cartesian to polar converter to convert the received pilot signal from Cartesian to polar form before the pilot subcarrier transfer function estimation module estimates the pilot subcarrier transfer function.

The direction of phase interpolation may be determined by a module which determines a ratio of the difference in the phase of the pilot signals and the difference in frequency. The required direction of phase interpolation is indicated according to whether the ratio is positive or negative.

According to a second aspect of the present invention there is provided a method of equalising an OFDM signal received by an OFDM receiver comprising the steps of:

simultaneously receiving a pilot signal transmitted via a pilot sub carrier and a data signal transmitted via a data subcarrier;
converting the pilot signal from Cartesian to polar coordinates;
calculating a pilot channel transfer function for the pilot channel;
extrapolating a data channel transfer function from the pilot channel transfer function; and
equalising the data channel signal using the extrapolated data channel transfer function.

The receiver may comprise an antenna and other conventional components to communicate the received pilot and data signals to a general purpose processor running machine readable code to implement the method and receiver of the invention. Accordingly the invention may be embodied in a package of machine readable code arranged for download into a device in which the steps of the receiver method and the components of the receiver are to be implemented by execution of the code. Further the invention may be embodied in a recording of the package of machine readable code.

Converting the received frequency bins to the complex polar domain facilitates separate interpolation of the phase and amplitude for each subcarrier.

**BRIEF DESCRIPTION OF THE DRAWINGS**

Embodiments of a receiver arranged to implement the method of the present invention will now be described, by way of example only, with reference to the accompanying figures, wherein:

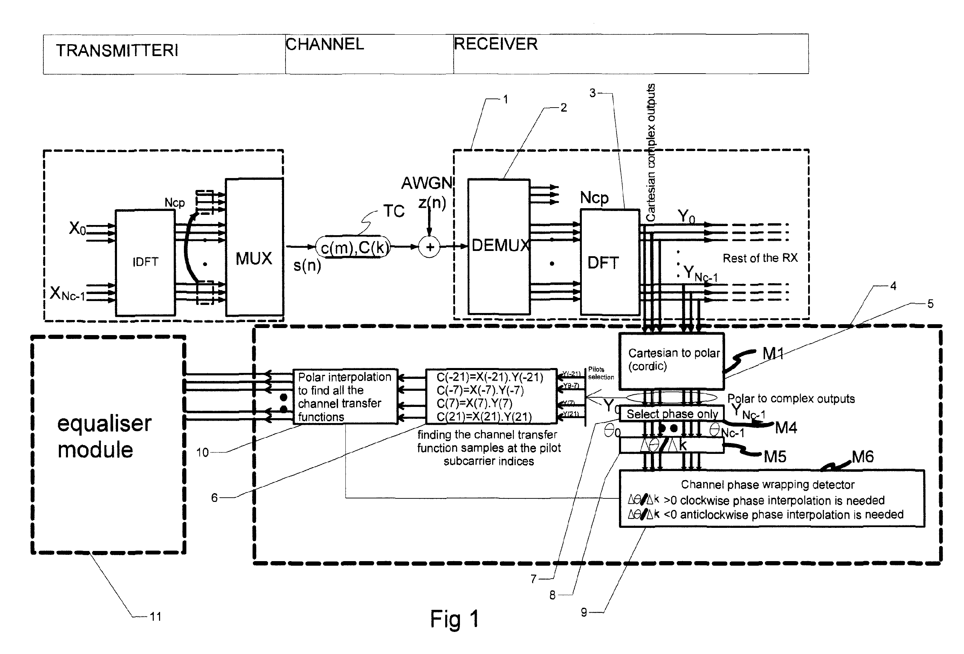

Fig. 1 is a diagram of an OFDM system comprising a transmitter and receiver.

**DETAILED DESCRIPTION OF EMBODIMENTS OF THE INVENTION**

FIG.1 illustrates a simplified and high-level block diagram of an OFDM system comprising a transmitter and a receiver (1) connected by a communication channel TC.

The OFDM transmitter TX transmits several symbols (or signals) in parallel by assigning each of them to a different subcarrier, each carrier being orthogonal to the others. The number of carriers (or subcarriers) depends on the total bandwidth and on the duration of a symbol (i.e. the size of the time window in which the receiver can capture the transmitted symbols). The transmitter is substantially conventional.

The symbols to be transmitted are represented as $X_0$-$X_{Nc-1}$ are initially in the frequency domain.

The symbols X1[k] to be transmitted at emitter EMT side are first appropriately encoded and then sent to a serial-to-parallel transformer (not depicted). This function block aims in extracting from a symbol, a number N of individual values X1[k], where "k" ranges from 1 to N-1 and "1" represents the ordinal number of the OFDM symbol to be transmitted.

This number N is equal to the number of subcarriers (s(n)) used for the transmission over the communication channel TC. The number of subcarriers used is generally selected depending on the standard to which the transmitter receiver systems complies. For instance according to WLAN 802.11a (on which relies the embodiment depicted on figure 5a), 52 subcarriers are used (48 data subcarriers + 4 pilot subcarriers), and 12 (6 on the "left" and 6 on the "right") subcarriers are not used (zero subcarriers).

Here and in the following description, the variable k will be used to refer to the frequency domain and the variable n for time domain.

The symbols XI[k] which are output by the serial-to-parallel convertor are provided to a frequency-to-time conversion module IDFT. This frequency-to-time convertor can perform an inverse discrete Fourier Transform of the symbols XI[k] to generate symbols xl[n] in the time domain. These symbols xl[n] are then multiplexed by the parallel-to-serial transformer (MUX), to produce a signal transmitted over the transmission channel TC. Some cyclic prefixes are also added at the input of the transformer MUX. $N_{CP}$ is the number of cyclic prefixes.

The multiplexer MUX modulates the orthogonal subcarriers by the symbols to be transmitted.

A conventional multiplexer (MUX), transposes the signals into the time domain and modulates the subcarriers (s(n) for transmission over the communication channel TC.

The receiver 1 includes a demultiplexer (DEMUX) 2 which transposes the received signals back to the frequency domain to extract the transmitted symbols and noise.

The transmitted OFDM symbol s(n) signal spectrum is the sum in the frequency domain of the orthogonal subcarrier sinc functions that are superposed over each other. The individual symbols can be independently modulated by using different types of modulations techniques, like for instance QAM (Quadrature Amplitude Modulation) or PSK (Phase-Shift Keying).

The transmission channel TC is associated with a transfer function C(k) and an impulse response c(n). The transfer function represents the channel multipath behaviour, delay, and complex attenuation. The transfer function may vary over time and is therefore indexed by the number n of the transmitted symbol.

Noise z(n) can also be introduced during the transmission over the communication channel TC.

The receiver 1 comprises receiving circuits, particularly a demultiplexer 2 (DEMUX) and a time to frequency conversion module 3 (DFT) which generates demodulated symbols Y1[k] from the received symbols stream. The demodulated symbols can then be passed over to other circuitry of the receiver RCV (not depicted).

The receiving circuitry may perform different steps which are usual in OFDM systems but may be subject to variations and different implementations. The receiver 1 receives the signal and performs a serial to parallel transformation in the serial-to-parallel transformer or demultiplexer 2 (DEMUX), which parallelizes each received symbol to a set of time symbols Y1 (n). It can also remove the cyclic prefixes.

A time to frequency conversion is performed by the time-to-frequency conversion module 3 (DFT) performs a discrete Fourier Transform of the time symbols y1(n) to generate a set of received frequency bins $Y_1(k)$ in the frequency domain, corresponding to determined subcarriers.

At a fourth step a parallel-to-serial transformer (not depicted) produce symbols $Y_1(k)$ made of these received frequency bins $Y_1(k)$. These symbols can then be transmitted to other circuits of the receiver RCV (also not depicted in the figure).

In order to perform these steps, the receiver 1 shares the same subcarrier frequencies, as well as the number of subcarriers N with the transmitter. They may have been communicated before the transmission, or they may be set or tuned previously in both the transmitter and receiver according to standards specifications.

In addition to the receiving circuitry, the receiver 1 comprises an estimation circuit 4.

The estimation circuit 4 may comprise several functional modules. The functional modules are herein described separately for clarity but may be implemented on a single device or possibly even in software.

A Cartesian to polar module 5 (M1) receives the frequency bins vectors $Y_0$-$Y_{Nc-1}$ in Cartesian form from the DFT 3 and performs the step of converting the frequency bins vectors to complex polar (cordic) values. A channel transfer function calculator module 6 (M2) receives the pilot subcarriers Y(-21), Y(-7), Y(7) and Y(21) from the Cartesian to polar module and computes a channel transfer function (C(-21), C(-7), C(7) and C(21) for the example of WLAN 802.11 a/g reception. The pilot subcarriers may be different for other applications. In this case the transfer function module 6 the transfer functions as follows:

$$\text{a.} \quad \dot{C}(-21) = X^*(-21).\ Y(-21)$$

$$\text{b.} \quad \dot{C}(-7) = X^*(-7).\ Y(-7)$$

$$\text{c.} \quad \dot{C}(7) = X^*(7).\ Y(7)$$

$$\text{d.} \quad \dot{C}(21) = X^*(21).\ Y(21)$$

These values are then provided to an extrapolation module 7 which performs polar interpolation (and extrapolation) to find all (or part of) the other channel transfer function samples, i.e. the values of C (k) of the other values of k ie k$\notin$[-21,-7,7,21].

Then the values of $\hat{C}(k)$ can be output by the extrapolation module 6 and provided to a channel equalizer (not depicted). This channel equalizer can be conventional.

By simulation and experience, it has been determined by the inventor that performing the interpolation in the complex polar domain provides better results than the conventional process of interpolation in the complex Cartesian domain. The process of interpolation in the complex polar domain produces, relative to interpolation in the complex Cartesian domain, a reduced error rate and better channel estimation accuracy.

The channel distorts the transmitted signal by distorting its amplitude (channel attenuation) and its phase (channel delay). Accordingly channel distortion occurs in the Polar form of the signal and not in its Cartesian form.

In addition, according to an embodiment of the invention, further functional modules can be put in place in order to compute an interpolation of the phase. These modules M4, M5, M6 avoid doing phase interpolation errors caused by channel frequency response phase wrapping.

The quantity X*(k)Y(k) can be interpolated in the complex polar domain by separately interpolating the amplitude and the phase, and then forming the complex vector C(k) from the interpolated amplitude and interpolated phase. Interpolating the amplitude has been described previously.

A phase extraction module 7 (M4) receives the frequency bins $Y_1(k)$ converted into polar coordinates from the Cartesian to polar module 5 and extract from them the phase $\Delta\theta(k)$.

The phase of each frequency bin vector (Y1 k) is then provided to a module M5 in charge of computing the values $\Delta\theta(k)/\Delta k$.

These values are then provided to a channel phase wrapping detector 8 (M6). This module is in charge of detecting and localizing each sub-channel at which the phase of the channel frequency response wraps from -$\pi$ to +$\pi$ or vice versa. Once each sub-channel is localized, the phase interpolation takes that into consideration in order to do the phase interpolation in a correct way.

If $\Delta\emptyset(k)/\Delta k$ between pilots is positive, a clockwise phase interpolation is to be done.

If $\Delta\emptyset(k)/\Delta k$ between pilots is negative, an anti-clockwise phase interpolation is to be done

Channel phase wrapping is a phenomenon that happens in multipath channels where a Rayleigh effect is provoked. In this case the channel impulse response is complex and not real anymore. Being complex, and because the phase is a value that can wrap, while interpolating the phase between two consecutive pilot subcarriers we do not know if the interpolation must be done in the clockwise or anticlockwise direction. By this invention, doing polar domain interpolation becomes possible thanks to the idea of the channel wrapping detector.

When the channel transfer functions are interpolated/extrapolated they are applied to an equaliser module 11 to equalise the subcarriers.

The invention has been described with reference to preferred embodiments. However, many variations are possible within the scope of the invention.

**Claims**

1. An OFDM receiver (1) configured to receive a plurality of signals transmitted in parallel via multiple subcarrier channels, wherein

   at least one subcarrier is a pilot subcarrier configured to receive a pilot signal and at least one subcarrier is a data subcarrier configured to carry a data signal comprising:

      a pilot subcarrier transfer function estimation module (4) arranged to receive the pilot signal and to estimate a transfer function for the pilot subcarrier response;
      an extrapolation/interpolation module (10) responsive to the estimated pilot channel transfer function arranged to extrapolate a transfer function for the channel response of the data subcarrier; and
      an equaliser module responsive to the extrapolated data subcarrier transfer function arranged to equalise a data signal received via the data sub carrier;

   **characterised in that** the pilot subcarrier estimation module comprises a Cartesian to polar converter (5) to convert the received pilot signal from Cartesian to polar form before the pilot subcarrier transfer function estimation module (6) estimates the pilot subcarrier transfer function.

2. A receiver according to claim 1 comprising a phase interpolation sub-system which compares the phase difference and frequency difference between pilot signals to determine the direction of phase interpolation required for the transfer function.

3. A receiver according to claim 2 wherein the phase interpolation sub-system comprises: a phase extractor module (7) responsive to polar frequency bins generated by the Cartesian to polar converter (5).

4. A receiver according to claim 2 or claim 3 comprising a calculator (9) to calculate a wrapping detector ratio from the ratio of the difference in phase ($\Delta\Theta$) between multiple pilot signals and a difference in frequency ($\Delta k$) between the pilot signals.

5. A receiver according to claim 4 having a channel phase wrapping detector (9) responsive to the wrapping detector ratio ($\Delta\Theta/\Delta k$) to implement a clockwise phase interpolation if the wrapping detector ratio is greater than zero and an anticlockwise phase interpolation if the wrapping detector ratio is less than zero.

6. A method of equalising an OFDM signal received at an OFDM receiver comprising the steps of:

      simultaneously receiving a pilot signal transmitted via a pilot subcarrier and a data signal transmitted via a data subcarrier;
      converting the pilot signal from Cartesian to polar coordinates;
      calculating a pilot channel transfer function for the pilot channel;
      extrapolating and interpolating a data channel transfer function from the pilot channel transfer function (C(k)); and
      equalising the data channel signal using the extrapolated data channel transfer function.

7. A method according to claim 6 comprising the steps of;
   separately interpolating an amplitude transfer function and phase transfer function from the pilot signal,
   forming a complex transfer function from the amplitude transfer function and phase transfer function;
   equalising the data signal by applying the complex transfer function and the data signal to an equaliser module of the receiver.

Fig 1

EP 2 790 363 A1

## EUROPEAN SEARCH REPORT

**Application Number**

EP 13 36 8026

| Europäisches Patentamt European Patent Office Office européen des brevets | | |
| --- | --- | --- |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 7 447 163 B1 (THOMSON JOHN S [US] ET AL) 4 November 2008 (2008-11-04) <br> * column 5, line 13 - column 6, line 8 * <br> * column 6, line 56 - column 7, line 2 * <br> * column 8, line 46 - column 9, line 55 * <br> * column 13, line 4 - column 15, line 22 * <br> ----- | 1-7 | INV. <br> H04L25/02 <br> H04L25/03 <br> H04L27/26 |
| X <br><br> Y | US 2007/183521 A1 (CHENG SHIN-SHIUAN [TW] ET AL) 9 August 2007 (2007-08-09) <br> * abstract * <br> * paragraph [0006] - paragraph [0014] * <br> * paragraph [0023] - paragraph [0028] * <br> ----- | 1,6,7 <br><br> 2-5 | |
| X <br><br> Y | US 2007/189149 A1 (TERABE SHIGEO [JP]) 16 August 2007 (2007-08-16) <br> * paragraph [0003] * <br> * paragraph [0053] - paragraph [0054] * <br> * paragraph [0060] - paragraph [0066] * <br> * paragraph [0155] * <br> ----- | 1,6,7 <br><br> 2-5 | |
| Y | PETERMANN T ET AL: "Blind turbo channel estimation in OFDM receivers", CONFERENCE RECORD OF THE 35TH. ASILOMAR CONFERENCE ON SIGNALS, SYSTEMS, & COMPUTERS. PACIFIC GROOVE, CA, NOV. 4 - 7, 2001; [ASILOMAR CONFERENCE ON SIGNALS, SYSTEMS AND COMPUTERS], NEW YORK, NY : IEEE, US, 4 November 2001 (2001-11-04), page 1489, XP032139940, DOI: 10.1109/ACSSC.2001.987736 ISBN: 978-0-7803-7147-7 <br> * Section 2 * <br> * Section 3, first paragraph * <br> * Section 3.1 * <br> * Section 4 * <br> * figures 1-3 * <br> ----- <br> -/-- | 2-5 | **TECHNICAL FIELDS SEARCHED (IPC)** <br><br> H04L |

The present search report has been drawn up for all claims

| Place of search | Date of completion of the search | Examiner |
| --- | --- | --- |
| Munich | 5 September 2014 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 13 36 8026

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SEONGWOOK SONG ET AL: "Blind OFDM Channel Estimation Using FIR Constraints: Reduced Complexity and Identifiability", IEEE TRANSACTIONS ON INFORMATION THEORY, IEEE PRESS, USA, vol. 53, no. 3, 1 March 2007 (2007-03-01), pages 1136-1147, XP011168432, ISSN: 0018-9448, DOI: 10.1109/TIT.2006.890774 * abstract * * Section V.B * * Section V.C * * Section V.D * * Section V.E *<br>----- | 2-5 | |

TECHNICAL FIELDS
SEARCHED (IPC)

The present search report has been drawn up for all claims

| Place of search | Date of completion of the search | Examiner |
|---|---|---|
| Munich | 5 September 2014 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 36 8026

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2014

| Patent document cited in search report | Publication date | Patent family member(s) | Publication date |
|---|---|---|---|
| US 7447163 B1 | 04-11-2008 | US 7447163 B1<br>US 7792052 B1 | 04-11-2008<br>07-09-2010 |
| US 2007183521 A1 | 09-08-2007 | TW I376145 B<br>US 2007183521 A1 | 01-11-2012<br>09-08-2007 |
| US 2007189149 A1 | 16-08-2007 | JP 4751733 B2<br>JP 2007215132 A<br>US 2007189149 A1 | 17-08-2011<br>23-08-2007<br>16-08-2007 |

EPO FORM P0459

For more details about this annex : see Official Journal of the European Patent Office, No. 12/82